(19) Europäisches Patentamt
European Patent Office
Office européen des brevets

(11) **EP 2 498 073 A1**

(12) **EUROPEAN PATENT APPLICATION**
published in accordance with Art. 153(4) EPC

(43) Date of publication:
**12.09.2012 Bulletin 2012/37**

(51) Int Cl.:
***G01J 3/36*** *(2006.01)*

(21) Application number: **09851065.4**

(22) Date of filing: **04.11.2009**

(86) International application number:
**PCT/JP2009/005854**

(87) International publication number:
**WO 2011/055405 (12.05.2011 Gazette 2011/19)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Nireco Corporation
Tokyo 192-8522 (JP)**

(72) Inventors:
• **MATSUMOTO, Tamotsu
Hachioji City
Tokyo 192-0032 (JP)**

• **ASANO, Tatsurou
Hachioji City
Tokyo 192-0032 (JP)**

(74) Representative: **Zimmermann & Partner
Josephspitalstr. 15
80331 München (DE)**

(54) **SPECTRAL INFORMATION READ DEVICE**

(57)     The apparatus (500) for reading spectral information out of image patterns includes a solid-state image sensor (510) for taking pictures of image patterns (115), a unit (520) for making one-dimensional images out of light having reflected at the image patterns, a spectroscope (530) introducing the one-dimensional images into the solid-state image sensor (510), a shutter unit (511) located in front of the solid-state image sensor (510), and a synchronizer (540) turning the shutter unit (511) on or off in synchronization with movement of the image patterns, the spectroscope (530) disperses light having entered thereinto into each of wavelengths, and makes three-dimensional image spectrum which is wavelength dispersive for each of pixels in association with each of locations of the image patterns.

[FIG.1]

**Description**

FIELD OF THE INVENTION

The invention relates to an apparatus for reading spectral information (specifically, three-dimensional image spectrum) out of image patterns formed on a planar object on which common image patterns are cyclically formed in a certain direction, in particular, a printed matter on which common image patterns are cyclically printed in a certain direction, a method of reading spectral information, and a program for causing a computer to carry out the method.

BACKGROUND ART

There have been suggested various apparatuses for reading spectral information of images formed on an object which keeps moving.

For instance, Japan Patent Application Publication No. 2005-337793 (patent reference 1) suggests an apparatus for inputting spectral images thereinto, including an image-forming optical system, and an observation optical system including a spectral element and a light-receiving element both located on an optic path of the image-forming optical system.

Japan Patent Application Publication No. 2004-354097 (patent reference 2) suggests an apparatus for producing spectral images for detecting how much degree an inner wall of a tunnel is degraded. The apparatus includes means for dispersing light having reflected at a target area, means for producing spectral images containing spectral intensity for each of spectral wavelengths of the light having been dispersed by the light-dispersing means, and means for detecting a degraded portion in the target area, based on spectral intensity in a particular spectral wavelength band of the spectral images of the target area. The apparatus is mounted on a train running through a tunnel, for instance.

Japan Patent Application Publication No. 2006-170669 (patent reference 3) suggests an apparatus for carrying out both an appearance test and an inner quality test to fruits. The apparatus includes a solid-state image sensor, a spectroscope dispersing one-dimensional images of a target in each of wavelengths by means of a diffraction grating, and producing spectral images which are wavelength-dispersive in each of wavelengths, means for moving both target fruits and the spectroscope, and an analyzer carrying out an appearance test and an inner quality test to the target fruits based on the spectral images data.

PRIOR ART REFERENCES

PATENT REFERENCES

Patent reference 1: Japan Patent Application Publication No. 2005-337793
Patent reference 2: Japan Patent Application Publication No. 2004-354097
Patent reference 3: Japan Patent Application Publication No. 2006-170669

DISCLOSURE OF THE INVENTION

PROBLEMS TO BE SOLVED BY THE INVENTION

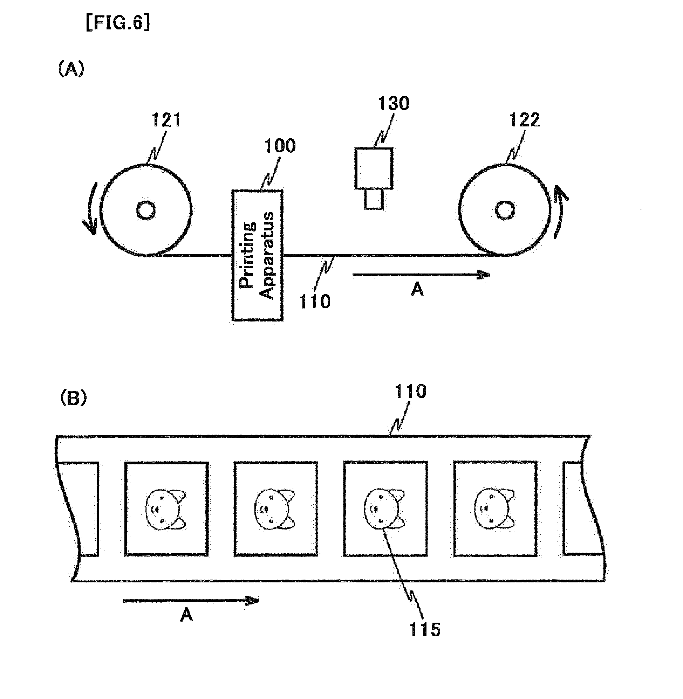

FIG. 6(A) is a schematic view illustrating an operation of a conventional printing apparatus 100.

A film 110 (for instance, a paper or a thin plastic film) is wound at opposite ends thereof around a first roll 121 and a second roll 122. By rotating both the first roll 121 and the second roll 122 in a counterclockwise direction, the film 110 runs in a direction "A" towards the second roll 122 from the first roll 121, and thus, is wound around the second roll 122.

The printing apparatus 100 is located between the first roll 121 and the second roll 122, and prints images onto the film 110 running in the direction "A".

FIG. 6(B) is a plan view of the film 110 on which images are printed.

As illustrated in FIG. 6(B), common image patterns 115 are printed cyclically (that is, at a constant interval) on the film 110 in a direction (specifically, in the direction "A").

An apparatus 130 for detecting defects is located between the printing apparatus 100 and the second roll 122. The apparatus 130 comprises, for instance, a camera for taking pictures of the image patterns 115, an analyzer for analyzing the image patterns 115 taken by the camera, and a detector for comparing the results of analysis having been output from the analyzer to a standard image pattern to thereby judge whether there are defects in the image patterns 115.

The apparatus 130 for detecting defects detects the image patterns 115 as actual shapes, and compares them to a predetermined standard image pattern to therey find defects in the image patterns 115. Thus, defects which the apparatus 130 can detect are limited to defects relating to a shape of the image patterns 115 (for instance, color drifting, ink leaping, and color spewing, and so on).

On the other hand, defects of the image patterns 115 include a defect which gradually progresses with the lapse of time, such as degradation of color density with the lapse of time (color density of image patterns gradually weakens with an increase in a volume of printed material).

However, since such a defect as mentioned above is not a defect relating to a shape of the image patterns 115, the above-mentioned apparatus 130 for detecting defects cannot detect the defect.

In order to detect the above-mentioned defect, it is necessary to obtain spectral information (specifically, three-dimensional image spectrum) of all of the image patterns 115 printed on the film 110. However, there has been never suggested an apparatus capable of obtaining spectral information (three-dimensional image spectrum) of all of the image patterns 115.

For instance, though it is considered to employ the above-mentioned apparatuses disclosed in the patent references 1 to 3, an object to be detected by the apparatuses appears only once, and hence, it is impossible to apply the apparatuses to an object, such as the film 110, in which the same image patterns 115 cyclically and repeatedly appear.

In view of the above-mentioned problem in the conventional apparatuses, it is an object of the present invention to provide an apparatus for reading spectral information (specifically, three-dimensional image spectrum) out of image patterns formed on a planar object (in particular, a printed matter) on which common image patterns are cyclically formed in a certain direction, and detecting a change (in particular, degradation occurring with the lapse of time) occurring in image patterns with the lapse of time, a method of doing the same, and a program for causing a computer to carry out the method.

SOLUTION TO THE PROBLEMS

Hereinbelow is explained the solution to the above-mentioned problem through the use of reference numerals to be used in "Embodiment for Reducing the Invention to Practice". The reference numerals are used only for showing the correspondence between "Claims" and "Embodiment for Reducing the Invention to Practice", and are not be used to interpret the scope of the present invention defined in "Claims".

In order to accomplish the above-mentioned object, the present invention provides an apparatus (500) for reading spectral information out of image patterns (115) formed on a planar object (110) on which the image patterns (115) are cyclically formed in a certain direction (A) and which keeps moving in the certain direction (A), including a solid-state image sensor (510) for taking pictures of the image patterns (115), a unit (520) for making one-dimensional images out of light having reflected at the image patterns (115), a spectroscope (530) introducing the one-dimensional images into the solid-state image sensor (510), a shutter unit (511) located between the spectroscope (530) and the solid-state image sensor (510), and a synchronizer (540) turning the shutter unit (511) on or off in synchronization with movement of the image patterns, (115), wherein the spectroscope (530) disperses light having entered thereinto into each of wavelengths, and makes three-dimensional image spectrum which is wavelength-dispersive for each of pixels in association with each of locations of the image patterns (115) under a location axis and a wavelength axis, the location axis of the image patterns (115) extending in a direction (B) perpendicular to the certain direction (A) in a light-receiving plane of the solid-state image sensor (510), the wavelength axis extending in a direction perpendicular to both the certain direction (A) and a direction (B) perpendicular to the certain direction (A).

It is preferable that the unit (520) for making one-dimensional images includes a slit (522) for forming one-dimensional image of a pixel in the image patterns (115) in a direction (B) perpendicular to the certain direction (A).

The present invention further provides an apparatus for reading spectral information out of image patterns (115) formed on a planar object (110) on which the image patterns (115) are cyclically formed in a certain direction (A) and which keeps moving in the certain direction (A), including a solid-state image sensor (510) for taking pictures of the image patterns (115), a unit (520) for making one-dimensional images out of light having reflected at the image patterns (115), a spectroscope (530) introducing the one-dimensional images into the solid-state image sensor (510), a stroboscope (610, 620) emitting light to at least one of front and rear sides of the image patterns (115), and a synchronizer (540) turning the stroboscope (610, 620) on or off in synchronization with movement of the image patterns (115), wherein the spectroscope (530) disperses light having entered thereinto into each of wavelengths, and makes three-dimensional image spectrum which is wavelength-dispersive for each of pixels in association with each of locations of the image patterns (115) under a location axis and a wavelength axis, the location axis of the image patterns extending in a direction (B) perpendicular to the certain direction (A) in a light-receiving plane of the solid-state image sensor (510), the wavelength axis extending in a direction perpendicular to both the certain direction (A) and a direction (B) perpendicular to the certain direction (A).

The planar object (110) is a printed matter, for instance.

The present invention further provides a method of reading spectral information out of image patterns (115) formed on a planar object (110) on which the image patterns (115) are cyclically formed in a certain direction (A) and which keeps moving in the certain direction (A), including a first step of taking pictures of the image patterns (115) by means of a solid-state image sensor (510), a second step of dispersing light having reflected at the image patterns (115), into each of wavelengths, and making three-dimensional image spectrum which is wavelength-dispersive for each of pixels in association with each of locations of the image patterns (115) under a location axis and a wavelength axis, the location axis of the image patterns (115) extending in a direction (B) perpendicular to the certain direction (A) in a light-receiving plane of the solid-state image sensor (510), the wavelength axis extending in a direction perpendicular to both the certain direction (A) and a direction (B) perpendicular to the certain direction (A), and a third step of controlling a timing at which the solid-state image sensor (510) takes pictures, in synchronization with movement of the image patterns (115).

The present invention further provides a recording medium readable by a computer, storing a program therein for causing a computer to carry out a method of reading spectral information out of image patterns (115) formed on a planar object (110) on which the image patterns (115) are cyclically formed in a certain direction (A) and which keeps moving in the certain direction (A), steps executed by the computer in accordance with the program including a first step of controlling an operation of the solid-state image sensor (510) to take pictures of the image patterns (115), a second step of dispersing light having reflected at the image patterns (115), into each of wavelengths, and making three-dimensional image spectrum which is wavelength-dispersive for each of pixels in association with each of locations of the image patterns (115) under a location axis and a wavelength axis, the location axis of the image patterns (115) extending in a direction perpendicular to the certain direction (A) in a light-receiving plane of the solid-state image sensor (510), the wavelength axis extending in a direction perpendicular to both the certain direction (A) and a direction perpendicular (B) to the certain direction (A), and a third step of controlling a timing at which the solid-state image sensor (510) takes pictures, in synchronization with movement of the image patterns (115).

ADVANTAGES PROVIDED BY THE INVENTION

In accordance with the present invention, image patterns formed on an object is read in synchronization with movement of the object moving at a constant speed. Thus, it is possible to simultaneously read repeated image patterns formed on the moving object and spectral spectrum of each pixel in the image patterns.

In other words, the solid-state image sensor repeatedly observes the same image patterns, since the object keeps running in a predetermined direction, and hence, it is possible to have three-dimensional image spectrum of the image patterns by taking one-line image data out of each of the image patterns, and repeating the same in a number necessary to form one whole picture (for instance, 2048 lines).

Thus, by taking image data out of each of the image patterns and comparing them to each other, or comparing them to standard data, it is possible to detect changes occurring in the image patterns with the lapse of time (for instance, degradation of color density occurring with the lapse of time) and other changes in the image patterns occurring with the lapse of time.

BRIEF DESCRIPTION OF THE DRAWINGS

[FIG. 1] FIG. 1 is a schematic view illustrating a structure of the apparatus for reading spectral information, in accordance with the first embodiment of the present invention.

[FIG. 2] FIG. 2 is a block diagram of a control unit which is a part of the apparatus for reading spectral information, in accordance with the first embodiment of the present invention.

[FIG. 3] FIG. 3 is a plan view showing an example of images taken by a solid-state image sensor which is a part of the apparatus for reading spectral information, in accordance with the first embodiment of the present invention.

[FIG. 4] FIG. 4 is a schematic view showing an example of image data to be stored in an image memory which is a part of the apparatus for reading spectral information, in accordance with the first embodiment of the present invention.

[FIG. 5] FIG. 5 is a schematic view illustrating a structure of the apparatus for reading spectral information, in accordance with the second embodiment of the present invention.

[FIG. 6] FIG. 6(A) is a schematic view showing an operation of a conventional printing apparatus, and FIG. 6(B) is a plan view of a film on which image patterns are printed.

EMBODIMENTS FOR REDUCING THE INVENTION TO PRACTICE

(First Embodiment)

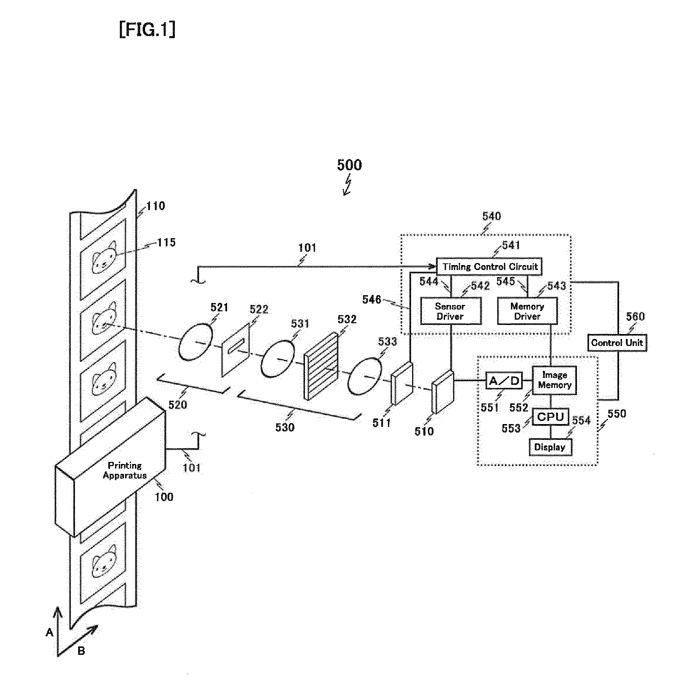

FIG. 1 is a schematic view illustrating a structure of the apparatus 500 for reading spectral information, in accordance with the first embodiment of the present invention.

As illustrated in FIG. 6(B), the same image patterns 115 are printed cyclically (that is, at a constant interval) on a film 110 in a certain direction A, and the film 110 runs at a constant speed (for instance, at a speed of 200 to 300 meters per a minute) in the direction A. The apparatus 500 in accordance with the first embodiment has a function of reading spectral spectrum of each of pixels in each of the image patterns 115 printed on the film 110, and making three-dimensional image spectrum.

The apparatus 500 in accordance with the first embodiment includes a solid-state image sensor 510, a shutter unit 511, a unit 520 for making one-dimensional images, a spectroscope 530, a synchronizer 540, an analyzer 550, and a control unit 560.

The solid-state image sensor 510 takes pictures of each of the image patterns 115.

The solid-state image sensor 510 is comprised of a two-dimensional sensor (that is, an area sensor) having a light-receiving surface in which pixels are two-dimensionally arranged (that is, arranged in X and Y axes). In front of the light-receiving surface are arranged the unit 520, the spectroscope 530, and the shutter unit 511 in an order closer to the film 110.

As detailed later, the solid-state image sensor 510 one-dimensionally takes pictures of the image patterns 115, and receives photo-signals of the thus taken one-dimensional images into the light-receiving surface in a first direction (for instance, in a vertical direction), and disperses the photo-signals of the one-dimensional images in dependence on a wavelength in the light-receiving surface in a second direction (for instance, in a horizontal direction). Thus, the solid-state image sensor 510 receives the photo-signals (spectral spectrum) which are wavelength-dispersive in the second direction in association with each of locations of the pixels in the first direction.

The solid-state image sensor 510 may be comprised of a CCD camera or a CMOS camera, for instance.

The solid-state image sensor 510 in the first embodiment has a spectral wavelength range from 400 nm to 700 nm.

Between the film 110 and the solid-state image sensor 510 are located the unit 520 for making one-dimensional images, the spectroscope 530, and the shutter unit 511 in an order closer to the film 110.

The shutter unit 511 includes a shutter. As mentioned later, on/off timing of the shutter, that is, opening or closing of the shutter is controlled by a timing control circuit 541 which is a part of the synchronizer 540.

The unit 520 for making one-dimensional images comprises a first image-formation lens 521, and a slit 522. The first image-formation lens 521 and the slit 522 are arranged in an order closer to the film 110.

The first image-formation lens 521 forms images of the image patterns 115 comprised of light having reflected at the image patterns 115, and provides the thus formed images to the first slit 522. By locating the film 110 between the first image-formation lens 521 and the first slit 522, it is possible to locate the first slit 522 remote from the film 110.

The first slit 522 extends in a direction B (a width-wise direction of the film 110) perpendicular to the direction A in which the film 110 runs, and is in parallel with the film 110. The first slit 522 is designed to have a width (a length in the direction A) such that an image associated with a pixel of each of the image patterns 115 arranged in the direction B can be read.

A light having passed through the first image-formation lens 521 and the first slit 522 includes images associated with a pixel of each of the image patterns 115 in the direction B.

The unit 520 for making one-dimensional images forms light defining one-dimensional images out of light having reflected at the image patterns 115, and transmits the thus formed light to the spectroscope 530 located downstream of the unit 520.

The spectroscope 530 located downstream of the unit 520 is comprised of a collimator lens 531, a diffraction grating 532, and a second image-formation lens 533.

Light having passed through the slit 522 is turned into parallel light (parallel light rays) after passing through the collimator lens 531.

The parallel light arrives at the diffraction grating 532. The diffraction grating 532 is a grating through which light can pass. The parallel light is diffracted in the diffraction grating 532, and then, arrives at the second image-formation lens 533.

The light having arrived at the second image-formation lens 533 is formed by the second image-formation lens 533, and then, arrives at the solid-state image sensor 510 through the shutter unit 511.

As mentioned later, on/off timing of the shutter unit 511 is controlled by the timing control circuit 541. While the shutter unit 511 is on, that is, while the shutter unit 511 is open, the lights having been formed by the second image-formation lens 533 are introduced into the solid-state image sensor 510.

The synchronizer 540 is comprised of a timing control circuit 541, a sensor driver 542, and a memory driver 543.

As mentioned later, the synchronizer 540 controls on/off timing of the shutter unit 511 in synchronization with the movement of the image patterns 115.

The printing apparatus 100 transmits a timing signal 101 to the timing control circuit 541 each time the image pattern 115 is printed on the film 110. That is, the image patterns 115 are printed at a constant interval. Expressing the interval with "S", the timing signal 101 is transmitted each time the film 110 runs by a distance "S".

The timing control circuit 541 calculates a time at which each of the image patterns 115 arrives in front of the solid-state image sensor 510, based on a time at which the timing control circuit 541 received the timing signal 101 from the printing apparatus 100, a speed at which the film 110 runs in the direction A, and the distance "S" by which the adjacent image patterns 115 are spaced away.

The timing control circuit 541 transmits a shutter drive signal 546 to the shutter unit 511 at a time at which each of the image patterns 115 arrives at in front of the solid-state image sensor 510 (and hence, in front of the shutter unit 511).

On receipt of the shutter drive signal 546 from the timing control circuit 541, the shutter unit 511 opens the shutter by a predetermined period of time. Hence, the light-receiving surface of the solid-state image sensor 510 is exposed to the light having passed through the second image-formation lens 533. That is, the solid-state image sensor 510 takes a picture of each of the image patterns 115.

After having transmitted the shutter drive signal 546 to the shutter unit 511, the timing control circuit 541 transmits an exposure-termination signal to the shutter unit 511 when a predetermined period of time (a period of time necessary for the light-receiving surface of the solid-state image sensor 510 to be exposed to the light) passed. On receipt of the exposure-termination signal, the shutter unit 511 closes the shutter.

As an alternative, the shutter unit 511 may be designed to automatically close the shutter when the above-mentioned predetermined period of time passes after the shutter was open.

After transmitting the exposure-termination signal to the shutter unit 511, the timing control circuit 541 transmits a first timing signal 544 to the sensor driver 542. On receipt of the first timing signal 544, the sensor driver 542 operates the solid-state image sensor 510 to transmit images signals stored therein, to an A/D converter 551.

At the same time, the timing control circuit 541 transmits a second timing signal 545 to the memory driver 543 so as to write the image signals into the image memory 552.

On receipt of the second timing signal 545, the memory driver 543 transmits both an address signal and a writing-timing clock signal to the image memory 552. The image memory 552 stores A/D-converted image data therein in accordance with the received signals.

Thus, the image signals taken by the solid-state image sensor 510 and expressing the images are stored in the image memory 552 in the form of digital signals.

The analyzer 550 is comprised of an A/D converter (analog to digital converter) 551, an image memory 552, a central processing unit (CPU) 553, and a display 554.

The A/D converter 551 receives analog signals including images of each of the image patterns 115, from the solid-state image sensor 510, and converts the received analog signals to digital signals.

As mentioned above, on each receipt of the address signal and the writing-timing clock signal from the memory driver 543, the image memory 552 receives a digital signal including images of each of the image patterns 115 from the A/D converter 551, stores the digital signal therein in accordance with the address signal, and integrates the digital signals.

The central processing unit (CPU) 553 analyzes the image patterns 115 stored in the image memory 552. For instance, the central processing unit (CPU) 553 compares image data of the image patterns 115 stored in the image memory 552 to standard image data, and judges whether each of the image patterns 115 has a defect.

The display 554 is comprised of a liquid crystal display, for instance. The display 554 displays the results of the analysis made by the central processing unit (CPU) 553 and/or images of the image patterns 115 stored in the image memory 552, if necessary.

The control unit 560 controls the operation of the synchronizer 540 and the analyzer 550.

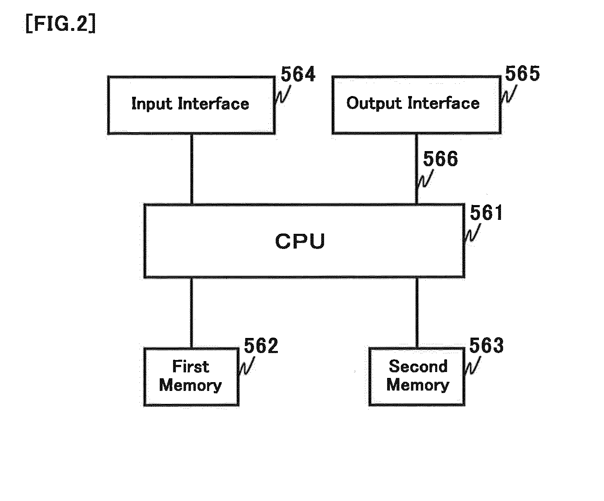

FIG. 2 is a block diagram of the control unit 560.

The control unit 560 is comprised of a central processing unit (CPU) 561, a first memory 562, a second memory 563, an input interface 564 through which a command and/or data is input into the central processing unit 561, an output interface 565 through which results of analysis having been executed by the central processing unit 561 is output, and buses 566 through which the central processing unit 561 are electrically connected to other parts.

Each of the first and second memories 562 and 563 is comprised of a semiconductor memory such as a read only memory (ROM), a random access memory (RAM) or an IC memory card, or a storage device such as a flexible disc, a hard disc or an optic magnetic disc. In the first embodiment, the first memory 562 is comprised of ROM, and the second memory 563 is comprised of RAM.

The first memory 562 stores therein both various control programs to be executed by the central processing unit 561, and fixed data. The second memory 563 stores therein various data and parameters, and presents a working area to the central processing unit 561. That is, the second memory 563 stores data which is temporarily necessary for the central processing unit 561 to execute programs.

The central processing unit 561 reads the program out of the first memory 562, and executes the program. Thus, the central processing unit 561 operates in accordance with the program stored in the first memory 562.

The apparatus 500 in accordance with the first embodiment, having the structure as mentioned above, operates as follows.

The film 110 on which the image patterns 115 are printed runs at a constant speed (for instance, 200 to 300 meters per a minute) in the direction A.

On receipt of the timing signal 101 from the printing apparatus 100, the timing control circuit 541 transmits the shutter drive signal 546 to the shutter unit 511 each time each of the image patterns 115 arrives at in front of the solid-state image sensor 510. On each receipt of the shutter drive signal 546, the shutter unit 511 opens a shutter. Thus, the solid-state image sensor 510 takes pictures of the image patterns 115 as follows.

Natural light existing around the film 110 are reflected at each of the image patterns 115, and the reflected light defining images of the image patterns 115 enter the unit 520 for making one-dimensional images. By passing through the slit 522, the reflected light turn into a light associated with one row of pixels arranged in the direction B (that is, one-dimensional image), and then, are transmitted to the spectroscope 530.

As mentioned below, the one-dimensional image light is decomposed into spectral spectrum by the spectroscope 530, and then, is introduced into the solid-state image sensor 510.

The solid-state image sensor 510 takes a picture of each of the image patterns 115 by one line in such a way as mentioned above.

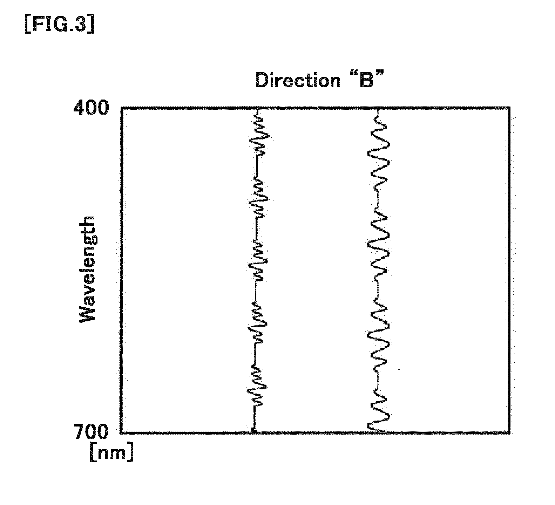

FIG. 3 is a plan view showing an example of images taken by the solid-state image sensor 510.

As illustrated in FIG. 3, the solid-state image sensor 510 forms two-dimensional images in which an axis of abscissa indicates a location in the direction B, and an axis of ordinates indicates a wavelength of the reflected light having entered the solid-state image sensor 510.

The two-dimensional images are converted into digital images by the A/D converter 551, and then, stored in the image memory 552 in accordance with both the second timing signal 545 transmitted to the memory driver 543 from the timing control circuit 541, and the address signal and the writing-timing clock signal both transmitted to the image memory 552 from the memory driver 543.

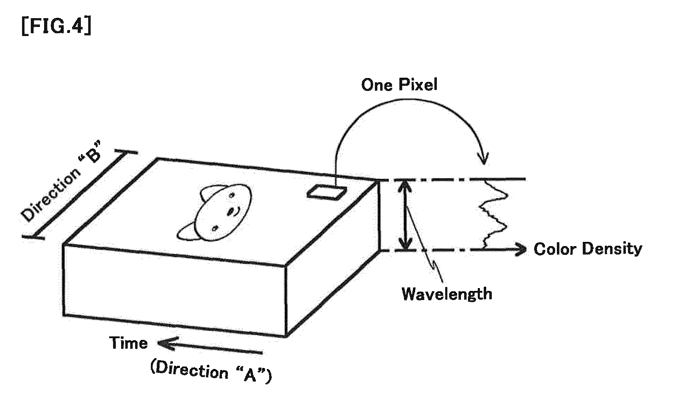

FIG. 4 is a schematic view showing an example of image data to be stored in the image memory 552.

The image memory 552 integrates spectral spectrum of the continuously taken image patterns 115, and reconstructs them into three-dimensional image spectrum (three-dimensional spectrum including changes occurring with the lapse of time).

That is, as illustrated in FIG. 4, three-dimensional image spectrum in which an X-axis indicates a location in the direction B, a Y-axis indicates a location in the direction A, and a Z-axis indicates a wavelength, that is, spectral spectrum associated with each of pixels, is stored in the image memory 552 for each of the image patterns 115.

As mentioned so far, since the film 110 runs in the direction A, the identical image patterns 115 are repeatedly supplied to the solid-state image sensor 510. Hence, it is possible to make three-dimensional image spectrum of the image patterns 115 by taking image data by one line out of each of the image patterns 115, and repeating the same in a number associated with one picture (for instance, 2048 lines).

An actual example is shown hereinbelow.

(1) Size of a picture: 400 mm × 400 mm
(2) Solid-state image sensor 510: DALSA FTF2020M (commercially available from DALSA Corporation in Canada)
The Solid-state image sensor 510 has the following specification.

(a) 2048 × 2048 pixels
(b) 21 fps (frames per second)
(c) Resolution in the direction B: ≃ 0.2 mm (≒ 400 mm/2048)
(d) Field of view: 400 mm × 0.2 mm

(3) Maximum running speed on the assumption that the resolution in the running direction A is equal to the resolution in the direction B, that is, about 0.2 mm (2048 pixels): 504 m/min (= 400 mm × 21 fps × 60 seconds)
(4) Reading speed in the case of (3): about 1 minute and 40 seconds

In order to have spectral spectrum associated with one picture, it is necessary to write images into the solid-state image sensor 510 by a number equal to a number of pixels arranged in the direction A in which the film 110 runs. Accordingly,

7

$$2048 \text{ pixels} \div 21 \text{ fps} \div 100 \text{ seconds} = 1 \text{ minute and } 40 \text{ seconds}$$

Since color density of the image patterns 115 slowly changes in printing process, there is caused no problems even though it takes some minutes to write images into the solid-state image sensor 510.

In order to increase a speed at which images are written into the solid-state image sensor 510, a scanning speed may be increased or a number of pixels arranged in the direction A may be reduced.

As mentioned so far, in accordance with the apparatus 500 for reading spectral spectrum, images of an object are read in synchronization with movement of the object moving at a constant speed. Accordingly, it is possible to simultaneously read both repeated images formed on the moving object and spectral spectrum of the images for each of pixels.

That is, since the film 110 runs in the direction A, the identical image patterns 115 are repeatedly supplied to the solid-state image sensor 510. Hence, it is possible to make one spectral image by taking image data by one line out of each of the image patterns 115, and repeating the same in a number associated with one picture (for instance, 2048 lines).

Thus, by taking image data out of each of the image patterns 115 and comparing them to each other, or comparing them to standard data, it is possible to detect changes occurring in the image patterns with the lapse of time (for instance, degradation of color density occurring with the lapse of time) and other changes in the image patterns occurring with the lapse of time.

A structure of the apparatus 500 in accordance with the first embodiment is not to be limited to the above-mentioned structure, but may be designed to include variations.

In the apparatus 500 in accordance with the first embodiment, though the first image-formation lens 521 is located between the film 110 and the slit 522 to thereby allow the slit 522 to be located remote from the film 110, the apparatus 500 may be designed not to include the first image-formation lens 521, in which case, the slit 522 is located immediately above the film 110.

In the apparatus 500 in accordance with the first embodiment, pictures of the image patterns 115 are taken making use of environmental natural light. As an alternative, a light source may be employed for taking pictures of the image patterns 115. In the case that a light source is employed, in order to prevent halation, it is preferable that the light source obliquely and upwardly irradiates light to the film 110 at an angle of 15 to 45 degrees relative to a vertical axis extending from the solid-state image sensor 510.

In the apparatus 500 in accordance with the first embodiment, though a printed matter on which the image patterns 115 are cyclically printed is selected as an object, other objects may be selected. For instance, a part, a material or a product which are cyclically moving may be selected as an object.

If the purpose of the apparatus 500 is merely to read spectral spectrum, the apparatus 500 may be designed not to include the analyzer 550.

In the apparatus 500 in accordance with the first embodiment, though the shutter unit 511 and the solid-state image sensor 510 are separated from each other, the shutter unit 511 may be incorporated into the solid-state image sensor 510.

The solid-state image sensor 510 in the apparatus 500 in accordance with the first embodiment has a spectral wavelength range of 400 nm to 700 nm, but the spectral wavelength range of the solid-state image sensor 510 is not to be limited to that. The solid-state image sensor 510 may be designed to cover wavelength ranges of near infrared rays and ultra violet rays.

(Second Embodiment)

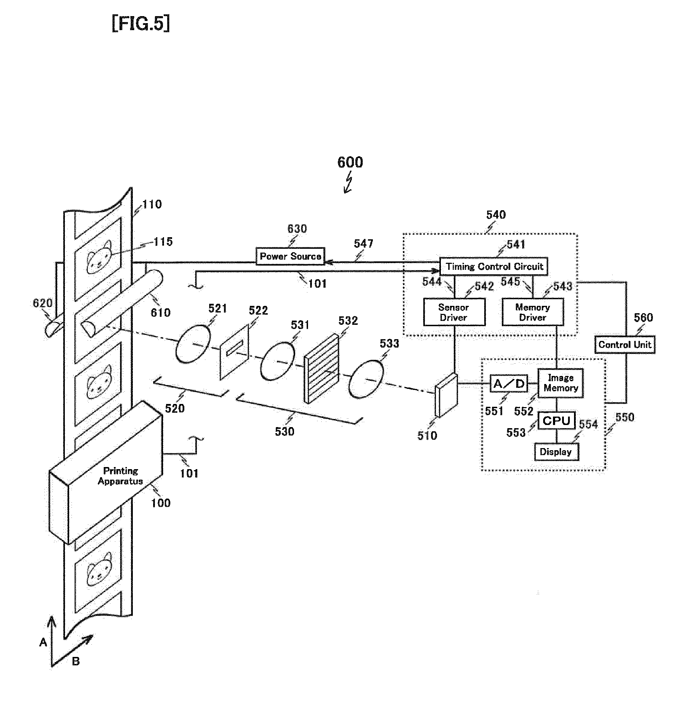

FIG. 5 is a schematic view illustrating a structure of the apparatus 600 for reading spectral information, in accordance with the second embodiment of the present invention.

The apparatus 600 in accordance with the second embodiment has the same structure as that of the apparatus 500 in accordance with the first embodiment except that the apparatus additionally includes a light-reflection type stroboscope 610, a light-transmission type stroboscope 620, and a power source 630 used for light sources, but does not include the shutter unit 511. Accordingly, parts that correspond to those of the apparatus 500 in accordance with the first embodiment have been provided with the same reference numerals.

The light-reflection type stroboscope 610 is located above the film 110 on a side where the solid-state image sensor 510 is located.

The light-transmission type stroboscope 620 is located above the film 110 on a side opposite to the side where the solid-state image sensor 510 is located.

Both the light-reflection type stroboscope 610 and the light-transmission type stroboscope 620 are electrically connected to the power source 630, and the power source 630 is electrically connected to the timing control circuit 541.

Both of the light-reflection type stroboscope 610 and the light-transmission type stroboscope 620 irradiate flash of light onto the film 110. In order to prevent halation, both the light-reflection type stroboscope 610 and the light-transmission type stroboscope 620 are situated so as to obliquely and upwardly irradiate light to the film 110 at an angle of 15 to 45 degrees relative to a vertical axis extending from the solid-state image sensor 510.

The light source 630 turns both the light-reflection type stroboscope 610 and the light-transmission type stroboscope 620 on or off in synchronization with an interval of the image patterns 115 (a distance between the adjacent image patterns 115). Specifically, the timing control circuit 541 transmits a storoboscope drive signal 547 to the light source 630 at the same time or immediately before each of the image patterns 115 arrives at in front of the solid-state image sensor 510. On each receipt of the storoboscope drive signal 547 from the timing control circuit 541, the light source 630 turns on both the light-reflection type stroboscope 610 and the light-transmission type stroboscope 620. Thus, flash of light are irradiated to the image patterns 115 in synchronization that the solid-state image sensor 510 takes pictures of the image patterns 115.

In the apparatus 600 in accordance with the second embodiment, since flash of light are irradiated to the image patterns 115 at a timing at which the solid-state image sensor 510 takes pictures of the image patterns 115, it is possible for the solid-state image sensor 510 to take pictures of vivid images.

The light-transmission type stroboscope 620 is used only when the film 110 is light-transmissive. Accordingly, the light-reflection type stroboscope 610 and/or the light-transmission type stroboscope 620 may be used in dependence on whether the film 110 is light-transmissive or not.

Specifically, when the film 110 is not light-transmissive, only the light-reflection type stroboscope 610 is employed. In contrast, when the film 110 is light-transmissive, both the light-reflection type stroboscope 610 and the light-transmission type stroboscope 620 may be employed, or only the light-transmission type stroboscope 620 may be employed.

In order to maximize the advantages of employing the light-reflection type stroboscope 610 and the light-transmission type stroboscope 620, it is possible to put the apparatus 600 in the darkness. For instance, both the film 110 and the apparatus 600 may be located in a dark room.

INDUSTRIAL APPLICABILITY

The present invention may be applied to a continuous test of printing quality, and further, to a test for materials or parts which are cyclically and continuously moving. By virtue of the analysis of spectral spectrum, it is also possible to analyze not only color, but also a profile of chemical components existing on a surface of an object.

INDICATION BY REFERENCE NUMERALS

500 Apparatus for reading spectral information, in accordance with the first embodiment of the present invention
510 Solid-state image sensor
520 Unit for making one-dimensional images
521 First image-formation lens
522 Slit
530 Spectroscope
531 Collimator lens
532 Diffraction grating
533 Second image-formation lens
540 Synchronizer
541 Timing control circuit
542 Sensor driver
543 Memory driver
544 First timing signal
545 Second timing signal
546 Shutter drive signal
547 Storoboscope drive signal
550 Analyzer
551 A/D converter
552 Image memory
553 Central processing unit (CPU)

554 Display
560 Control unit
561 Central processing unit (CPU)
562 First memory
563 Second memory
564 Input interface
565 Output interface
600 Apparatus for reading spectral information, in accordance with the second embodiment of the present invention
610 Light-reflection type stroboscope
620 Light-transmission type stroboscope
630 Light source

**Claims**

1.  An apparatus for reading spectral information out of image patterns formed on a planar object on which said image patterns are cyclically formed in a certain direction and which keeps moving in said certain direction, comprising:

    a solid-state image sensor for taking pictures of said image patterns;
    a unit for making one-dimensional images out of lights having reflected at said image patterns;
    a spectroscope introducing said one-dimensional images into said solid-state image sensor;
    a shutter unit located between said spectroscope and said solid-state image sensor; and
    a synchronizer turning said shutter unit on or off in synchronization with movement of said image patterns,
    wherein said spectroscope disperses lights having entered thereinto into each of wavelengths, and makes three-dimensional image spectrum which is wavelength-dispersive for each of pixels in association with each of locations of said image patterns under a location axis and a wavelength axis, said location axis of said image patterns extending in a direction perpendicular to said certain direction in a light-receiving plane of said solid-state image sensor, said wavelength axis extending in a direction perpendicular to both said certain direction and a direction perpendicular to said certain direction.

2.  The apparatus as set forth in claim 1, wherein said unit for making one-dimensional images includes a slit for forming one-dimensional image of a pixel in said image patterns in a direction perpendicular to said certain direction.

3.  An apparatus for reading spectral information out of image patterns formed on a planar object on which said image patterns are cyclically formed in a certain direction and which keeps moving in said certain direction, comprising:

    a solid-state image sensor for taking pictures of said image patterns;
    a unit for making one-dimensional images out of lights having reflected at said image patterns;
    a spectroscope introducing said one-dimensional images into said solid-state image sensor;
    a stroboscope emitting lights to at least one of front and rear sides of said image patterns; and
    a synchronizer turning said stroboscope on or off in synchronization with movement of said image patterns,
    wherein said spectroscope disperses lights having entered thereinto into each of wavelengths, and makes three-dimensional image spectrum which is wavelength-dispersive for each of pixels in association with each of locations of said image patterns under a location axis and a wavelength axis, said location axis of said image patterns extending in a direction perpendicular to said certain direction in a light-receiving plane of said solid-state image sensor, said wavelength axis extending in a direction perpendicular to both said certain direction and a direction perpendicular to said certain direction.

4.  The apparatus as set forth in any one of claims 1 to 3, wherein said planar object is a printed matter.

5.  A method of reading spectral information out of image patterns formed on a planar object on which said image patterns are cyclically formed in a certain direction and which keeps moving in said certain direction, comprising:

    a first step of taking pictures of said image patterns by means of a solid-state image sensor;
    a second step of dispersing lights having reflected at said image patterns, into each of wavelengths, and making three-dimensional image spectrum which is wavelength-dispersive for each of pixels in association with each of locations of said image patterns under a location axis and a wavelength axis, said location axis of said image patterns extending in a direction perpendicular to said certain direction in a light-receiving plane of said solid-state image sensor, said wavelength axis extending in a direction perpendicular to both said certain direction and a direction perpendicular to said certain direction; and

a third step of controlling a timing at which said solid-state image sensor takes pictures, in synchronization with movement of said image patterns.

6. A recording medium readable by a computer, storing a program therein for causing a computer to carry out a method of reading spectral information out of image patterns formed on a planar object on which said image patterns are cyclically formed in a certain direction and which keeps moving in said certain direction, steps executed by said computer in accordance with said program including:

a first step of controlling an operation of said solid-state image sensor to take pictures of said image patterns;
a second step of dispersing lights having reflected at said image patterns, into each of wavelengths, and making three-dimensional image spectrum which is wavelength-dispersive for each of pixels in association with each of locations of said image patterns under a location axis and a wavelength axis, said location axis of said image patterns extending in a direction perpendicular to said certain direction in a light-receiving plane of said solid-state image sensor, said wavelength axis extending in a direction perpendicular to both said certain direction and a direction perpendicular to said certain direction; and
a third step of controlling a timing at which said solid-state image sensor takes pictures, in synchronization with movement of said image patterns.

[FIG.1]

[FIG.2]

[FIG.3]

Direction "B"

[FIG.4]

[FIG.5]

[FIG.6]

(A)

(B)

## INTERNATIONAL SEARCH REPORT

| International application No. |
| --- |
| PCT/JP2009/005854 |

**A. CLASSIFICATION OF SUBJECT MATTER**
*G01J3/36*(2006.01)i

According to International Patent Classification (IPC) or to both national classification and IPC

**B. FIELDS SEARCHED**

Minimum documentation searched (classification system followed by classification symbols)
G01J3/00-G01J3/52, G01N21/00-G01N21/958

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
WPI, JSTPlus(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2002-048719 A (Glory Ltd.), | 6 |
| Y | 15 February 2002 (15.02.2002), paragraphs [0001], [0014] to [0019], [0025] to [0028], [0036] | 1-5 |
| Y | JP 9-329495 A (Kabushiki Kaisha Hyutekku), 22 December 1997 (22.12.1997), paragraphs [0024] to [0025], [0029] to [0031] | 1-5 |
| Y | JP 64-014038 A (Toppan Printing Co., Ltd.), 18 January 1989 (18.01.1989), page 2, upper right column, 4th paragraph to lower right column, 1st paragraph | 1-4 |
| A | JP 63-058139 A (Omron Tateisi Electronics Co.), 12 March 1988 (12.03.1988), fig. 1, 3; examples | 1-4 |

| ☒ | Further documents are listed in the continuation of Box C. | ☒ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 November, 2009 (18.11.09) | 01 December, 2009 (01.12.09) |

| Name and mailing address of the ISA/ | Authorized officer |
| --- | --- |
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/005854 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-515778 A  (MONSANTO TECHNOLOGY L.L.C.), 27 May 2004 (27.05.2004), fig. 2 to 3, 9 | 1-6 |
| A | Hideyuki HANAFUSA, "Inspection Systems for Quality Control and Quality Assure Purpose", Japan Tappi Journal, vol.50, no.1, 1997 Nen, pages 105 to 110 | 1-6 |

Form PCT/ISA/210 (continuation of second sheet) (April 2007)

<table>
<tr><td>INTERNATIONAL SEARCH REPORT<br>Information on patent family members</td><td>International application No.<br>PCT/JP2009/005854</td></tr>
</table>

| | | | |
|---|---|---|---|
| JP 2002-048719 A | 2002.02.15 | (Family: none) | |
| JP 9-329495 A | 1997.12.22 | (Family: none) | |
| JP 64-014038 A | 1989.01.18 | (Family: none) | |
| JP 63-058139 A | 1988.03.12 | (Family: none) | |
| JP 2004-515778 A | 2004.05.27 | AR 031284 A1 | 2003.09.17 |
| | | AU 4340702 A | 2002.06.24 |
| | | BG 107842 A | 2004.01.30 |
| | | BR 0115054 A | 2003.09.30 |
| | | CA 2426933 A1 | 2002.06.20 |
| | | CN 1484761 A | 2004.03.24 |
| | | CN 100392376 C | 2008.06.04 |
| | | EP 1332354 A2 | 2003.08.06 |
| | | HU 0302495 A2 | 2003.10.28 |
| | | HU 0302495 A3 | 2006.02.28 |
| | | MX PA03003819 A | 2004.04.20 |
| | | NO 20031925 A | 2003.06.26 |
| | | PL 362509 A1 | 2004.11.02 |
| | | RU 2003116064 A | 2005.02.20 |
| | | RU 2288461 C2 | 2006.11.27 |
| | | UA 79083 C2 | 2007.05.25 |
| | | US 6646264 B1 | 2003.11.11 |
| | | WO 02/48687 A2 | 2002.06.20 |
| | | WO 02/48687 A3 | 2002.07.25 |
| | | WO 02/48687 A8 | 2003.09.18 |
| | | ZA 200303298 A | 2004.07.29 |

Form PCT/ISA/210 (patent family annex) (April 2007)

**EP 2 498 073 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005337793 A
- JP 2004354097 A
- JP 2006170669 A